Européisches Patentamt

**European Patent Office**

**Office européen des brevets**

(19)

(11) **EP 1 555 523 A1**

(12) **DEMANDE DE BREVET EUROPEEN**

(43) Date de publication:
**20.07.2005 Bulletin 2005/29**

(51) Int Cl.$^7$: **G01N 21/55**

(21) Numéro de dépôt: **04405032.6**

(22) Date de dépôt: **19.01.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **CSEM**
**Centre Suisse d'Electronique et de Microtechnique S.A. - Recherche et Développement**
**2007 Neuchâtel (CH)**

(72) Inventeurs:
• **Cottier, Kaspar**
  **2000 Neuchâtel (CH)**
• **Kunz, Rino E.**
  **8700 Küsnacht (CH)**

(74) Mandataire: **Gresset, Jean**
**GLN**
**Gresset & Laesser Neuchâtel**
**Puits-Godet 8A**
**2000 Neuchâtel (CH)**

(54) **Dispositif de balayage de l'angle d'incidence d'un faisceau lumineux**

(57) L'invention concerne un actionneur optique destiné à balayer, à l'aide d'un faisceau provenant d'une source de lumière (S), sous des angles d'incidence variables ($\alpha$), une cible de surface constante (C). Il comporte :

- des premiers moyens (10) pour créer un foyer optique (11) dudit faisceau,
- des deuxièmes moyens (12, 13), interposés entre lesdits premiers moyens (10) et ledit foyer (11), pour dévier le faisceau de façon oscillante, et
- des troisièmes moyens (14), interposés entre ledit foyer (11) et ladite cible (C), pour transformer ce foyer en un faisceau collimaté dirigé sur la cible.

Fig.1

**Description**

La présente invention se rapporte principalement au domaine des senseurs chimiques et bio-chimiques dans lesquels un faisceau lumineux est utilisé pour mesurer une propriété optique d'un échantillon d'une substance à tester.

L'invention concerne, plus spécialement, un actionneur servant à balayer à l'aide d'un faisceau de lumière, sous différents angles d'incidence, une surface constante de relativement petites dimensions, typiquement de 1 à 100 mm$^2$, constituée d'au moins un échantillon biochimique à analyser.

Pour illustrer l'état de la technique dans ce domaine, on pourra se référer, notamment, au document US 5 583 643.

La lecture de ce document révèle que la position de la surface interrogée par le faisceau lumineux n'est pas constante. Cela nuit, évidemment, à la qualité de la mesure puisqu'on ne peut garantir qu'elle concerne avec précision la même zone de l'échantillon.

Le document EP 961 151 propose, certes, un actionneur optique permettant de diriger un faisceau optique à incidence variable sur une surface constante. Un miroir est disposé sur un équipage mobile qui le fait osciller de manière à recevoir le faisceau sous différents angles et à le rediriger vers sa cible.

On notera cependant qu'un tel actionneur est, à la fois, peu compact et lent, ce qui ne permet ni une bonne réduction du bruit ni un suivi, en temps réel, des réactions extrêmement rapides se produisant sur l'échantillon analysé.

La présente invention a pour but de fournir un actionneur exempt de ces inconvénients.

De façon plus précise, l'invention concerne un actionneur optique destiné à balayer, à l'aide d'un faisceau provenant d'une source de lumière, sous des angles d'incidence variables, une cible de surface constante, caractérisé en ce qu'il comporte :

- des premiers moyens pour créer un foyer optique dudit faisceau,
- des deuxièmes moyens, interposés entre lesdits premiers moyens et ledit foyer, pour dévier le faisceau de façon oscillante, et
- des troisièmes moyens, interposés entre ledit foyer et ladite cible, pour transformer ce foyer en un faisceau collimaté dirigé sur la cible.

De façon avantageuse, lesdits moyens sont agencés de manière à respecter approximativement la relation :

$$1/d_1 + 1/d_2 = 1/f_2$$

dans laquelle :

- $d_1$ est la distance entre les deuxièmes et troisièmes moyens ;
- $d_2$ est la distance entre les troisièmes moyens et la cible; et
- $f_2$ est la distance entre ledit foyer et les troisièmes moyens.

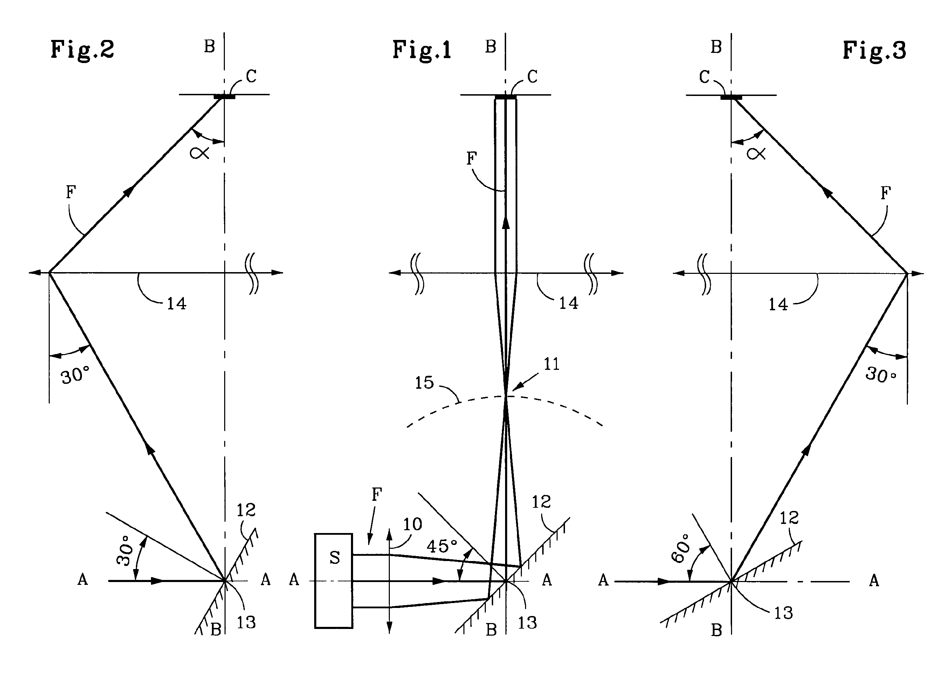

D'autres caractéristiques de l'invention ressortiront de la description qui va suivre, faite en regard du dessin annexé, dans lequel les figures 1, 2 et 3 représentent l'actionneur dans trois positions qui illustrent son fonctionnement.

L'actionneur représenté sur le dessin est destiné à diriger un faisceau lumineux F provenant d'une source S, telle qu'un laser à semi-conducteur, sur une cible C, telle que la face d'une cellule d'analyse biochimique (non représentée) comportant un réseau de diffraction sur lequel est placé un échantillon à analyser.

On remarquera que, sur les figures 2 et 3, seul a été représenté le rayon central du faisceau F frappant le centre de la cible C.

L'actionneur selon l'invention est conçu de manière à ce que la cible C soit touchée cycliquement par le faisceau F sous un angle d'incidence variable qui doit être, au minimum, de 10° de part et d'autre de la normale au plan de la cible.

Comme représenté, le faisceau F issu de la source S est, tout d'abord, reçu par une première lentille convergente 10 qui est centrée sur l'axe AA du faisceau et le focalise à son foyer 11 après qu'il ait été dévié par un miroir tournant 12.

Sur les figures, on s'est contenté de représenter une simple surface réfléchissante 12 capable de tourner autour d'un axe 13 perpendiculaire au plan du dessin et disposé dans l'axe du faisceau F, entraînant ainsi la variation de l'angle d'incidence du faisceau sur la cible C. Ce moyen 12 de déviation peut appartenir à tout système de déflexion optique connu de l'homme de métier, par exemple, un scanner polygonal utilisé dans les imprimantes et lecteurs de codes à barres, un déflecteur acousto-optique ou un miroir résonant. Un tel système est généralement capable de balayer la plage de variation de l'angle d'incidence du faisceau sur la cible à une fréquence d'au moins 2000° par seconde.

Le faisceau focalisé au foyer 11 de la lentille 10 est dirigé sur une deuxième lentille convergente 14 centrée sur un axe BB perpendiculaire à l'axe AA. Cette lentille projette finalement un faisceau collimaté sur la cible C qui est centrée sur l'axe BB.

Afin que l'actionneur soit capable de fonctionner ainsi, il est nécessaire que la relation suivante soit respectée :

$$1/d_1 + 1/d_2 = 1/f_2$$

dans laquelle :

- $d_1$ est la distance qui sépare le centre 13 du miroir tournant 12 de la deuxième lentille 14 ;
- $d_2$ est la distance qui sépare la deuxième lentille 14 de la cible C ; et
- $f_2$ est la distance focale de cette lentille.

On voit donc que le degré de collimation du faisceau peut être ajusté en jouant simplement, par exemple, sur la position de la première lentille 10.

Les trois figures illustrent le fonctionnement de l'actionneur qui vient d'être décrit. Lorsque le miroir tournant 12 offre une incidence de 45° au faisceau (figure 1), celui-ci est envoyé sur la cible selon l'axe BB. Lorsque l'incidence est de 30° (figure 2), le faisceau atteint la lentille 14 sous une incidence de 30° puis frappe la cible C sous une incidence $\alpha$. Enfin, lorsque l'incidence est de 60° (figure 3), le faisceau atteint la lentille 14 également sous une incidence de 30° mais de l'autre côté de l'axe BB, avant de frapper la cible sous la même incidence $\alpha$.

Dans l'exemple représenté, l'angle $\alpha$ est d'environ 45°. Lorsqu'une ouverture angulaire aussi grande est souhaitée, il peut être utile de tenir compte du fait que la distance entre le foyer 11 et la lentille 14 varie en fonction de l'angle d'incidence sur le miroir tournant 12. En effet, comme le montre la figure 1, le foyer 11 se déplace sur un cercle 15 centré sur l'axe de rotation 13 du miroir. Pour garantir la collimation du faisceau, la lentille 14 doit donc être asphérique ou être remplacée, comme sait le faire l'homme de métier, par un système de plusieurs lentilles ou une structure diffractive.

Ainsi est proposé un actionneur optique à la fois compact et rapide, qui permet un excellent suivi, en temps réel, des réactions extrêmement rapides se produisant sur l'échantillon analysé et présente un niveau de bruit amélioré par rapport à l'art antérieur.

Comme indiqué précédemment, une application particulièrement intéressante d'un tel actionneur est la commande d'un faisceau de lumière d'entrée d'un bio-capteur dont l'angle d'incidence, en un point déterminé dudit bio-capteur, représente la grandeur d'entrée de ce dernier. En effet, il s'agit de déterminer la valeur de l'angle d'incidence pour laquelle le guide d'onde, faisant partie du bio-capteur, présente une condition de résonance, cette valeur constituant une mesure de l'échantillon biochimique déposé sur le guide d'onde. Pour ce type d'application, il peut être avantageux de pouvoir déterminer précisément, soit la valeur instantanée de l'angle d'incidence, soit une valeur particulière de celui-ci par cycle de balayage. A cette fin, un encodeur peut être associé au miroir 12 pour fournir, en permanence, la position de ce dernier ou, encore, un photo-détecteur peut être placé à une position déterminée pour détecter le passage du faisceau incident par cette position.

## Revendications

1. Actionneur optique destiné à balayer, à l'aide d'un faisceau provenant d'une source de lumière (S), sous des angles d'incidence variables ($\alpha$), une cible de surface constante (C), **caractérisé en ce qu'il** comporte :

   - des premiers moyens (10) pour créer un foyer optique (11) dudit faisceau,
   - des deuxièmes moyens (12, 13), interposés entre lesdits premiers moyens (10) et ledit foyer (11), pour dévier le faisceau de façon oscillante, et
   - des troisièmes moyens (14), interposés entre ledit foyer (11) et ladite cible (C), pour transformer ce foyer en un faisceau collimaté dirigé sur la cible.

2. Actionneur selon la revendication 1, **caractérisé en ce que** lesdits moyens sont agencés de manière à respecter approximativement la relation :

$$1/d_1 + 1/d_2 = 1/f_2$$

   dans laquelle :

   - $d_1$ est la distance entre les deuxièmes (12, 13) et troisièmes (14) moyens ;
   - $d_2$ est la distance entre les troisièmes moyens (14) et la cible (C) ; et
   - $f_2$ est la distance entre ledit foyer (11) et les troisièmes moyens (14).

3. Actionneur selon l'une des revendications 1 et 2, **caractérisé en ce que** lesdits premiers moyens sont une lentille (10).

4. Actionneur selon l'une des revendications 1 et 2, **caractérisé en ce que** lesdits premiers moyens sont un ensemble de lentilles.

5. Actionneur selon l'une des revendications 1 et 2, **caractérisé en ce que** lesdits premiers moyens sont des éléments d'optique diffractive.

6. Actionneur selon l'une des revendications 1 à 5, **caractérisé en ce que** lesdits deuxièmes moyens appartiennent au groupe qui comporte les miroirs tournants, les scanners polygonaux utilisés dans les imprimantes et lecteurs de codes à barres, les déflecteurs acousto-optiques et les miroirs résonants.

7. Actionneur selon l'une des revendications 1 à 6, **caractérisé en ce que** lesdits troisièmes moyens appartiennent au groupe qui comporte une lentille unique, un système à plusieurs lentilles et une structure diffractive.

8.  Actionneur selon l'une des revendications 1 à 7, **caractérisé en ce que** lesdits deuxièmes moyens sont connectés à un encodeur fournissant, à tout moment, la position de ces derniers.

9.  Actionneur selon l'une des revendications 1 à 7, **caractérisé en ce qu'**il comprend, en outre, un photodétecteur placé à une position déterminée pour détecter le passage dudit faisceau par cette position.

Fig.2

Fig.1

Fig.3

B

C

α

F

14

30°

30°

12

13

A

A

B

C

F

14

15

11

S

10

45°

12

13

A

A

B

B

C

α

F

14

30°

12

13

60°

A

A

B

EP 1 555 523 A1

Office européen
des brevets

**RAPPORT DE RECHERCHE EUROPEENNE**

Numéro de la demande

EP 04 40 5032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 493 097 B1 (IVARSSON BENGT) 10 décembre 2002 (2002-12-10) * figure 21 * * figure 1 * --- | 1-9 | G01N21/55 |
| A | GB 2 247 749 A (MARCONI GEC LTD) 11 mars 1992 (1992-03-11) * figure 5 * * page 3, ligne 11 - page 4, ligne 17 * --- | 8,9 | |
| A | WO 02/48689 A (LEVY YVES ;GUEDON PHILIPPE (FR); INST OPTIQUE THEORIQUE ET APPL (F) 20 juin 2002 (2002-06-20) * figure 1 * ----- | 1-9 | |

DOMAINES TECHNIQUES RECHERCHES (Int.Cl.7)

G01N
G02B

Le présent rapport a été établi pour toutes les revendications

| Lieu de la recherche | Date d'achèvement de la recherche | Examinateur |
|---|---|---|
| LA HAYE | 6 mai 2004 | Quertemont, E |

**ANNEXE AU RAPPORT DE RECHERCHE EUROPEENNE
RELATIF A LA DEMANDE DE BREVET EUROPEEN NO.**

EP 04 40 5032

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

06-05-2004

| Document brevet cité au rapport de recherche | | Date de publication | Membre(s) de la famille de brevet(s) | | Date de publication |
|---|---|---|---|---|---|
| US 6493097 | B1 | 10-12-2002 | AU | 719654 B2 | 11-05-2000 |
| | | | AU | 5893198 A | 25-08-1998 |
| | | | DE | 69805756 D1 | 11-07-2002 |
| | | | DE | 69805756 T2 | 02-01-2003 |
| | | | EP | 0958494 A1 | 24-11-1999 |
| | | | JP | 2001511249 T | 07-08-2001 |
| | | | WO | 9834098 A1 | 06-08-1998 |
| | | | US | 2003067612 A1 | 10-04-2003 |
| GB 2247749 | A | 11-03-1992 | AUCUN | | |
| WO 0248689 | A | 20-06-2002 | FR | 2817963 A1 | 14-06-2002 |
| | | | FR | 2817962 A1 | 14-06-2002 |
| | | | AU | 1930402 A | 24-06-2002 |
| | | | CA | 2431399 A1 | 20-06-2002 |
| | | | EP | 1342071 A1 | 10-09-2003 |
| | | | WO | 0248689 A1 | 20-06-2002 |

Pour tout renseignement concernant cette annexe :  voir Journal Officiel de l'Office européen des  brevets, No.12/82